(19) **Europäisches Patentamt European Patent Office Office européen des brevets**

(11) **EP 4 723 186 A1**

(12) **EUROPEAN PATENT APPLICATION**
published in accordance with Art. 153(4) EPC

(43) Date of publication:
08.04.2026 Bulletin 2026/15

(21) Application number: 24815448.6

(22) Date of filing: 27.05.2024

(51) International Patent Classification (IPC):
$H01M\ 4/13^{(2010.01)}$  $H01M\ 4/133^{(2010.01)}$
$H01M\ 4/134^{(2010.01)}$  $H01M\ 4/36^{(2006.01)}$
$H01M\ 4/38^{(2006.01)}$  $H01M\ 4/48^{(2010.01)}$
$H01M\ 4/587^{(2010.01)}$  $H01M\ 4/62^{(2006.01)}$

(52) Cooperative Patent Classification (CPC):
Y02E 60/10

(86) International application number:
PCT/JP2024/019401

(87) International publication number:
WO 2024/247965 (05.12.2024 Gazette 2024/49)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 31.05.2023 JP 2023089878

(71) Applicant: **Panasonic Intellectual Property Management Co., Ltd.**
**Kadoma-shi, Osaka 571-0057 (JP)**

(72) Inventors:
• **KATOGI, Akihiro**
  **Kadoma-shi, Osaka 571-0057 (JP)**
• **TASHITA, Takamitsu**
  **Kadoma-shi, Osaka 571-0057 (JP)**
• **KANEKO, Sachiyo**
  **Kadoma-shi, Osaka 571-0057 (JP)**
• **FUJISHIGE, Junichi**
  **Kadoma-shi, Osaka 571-0057 (JP)**

(74) Representative: **Eisenführ Speiser**
**Patentanwälte Rechtsanwälte PartGmbB**
**Gollierstraße 4**
**80339 München (DE)**

(54) **NON-AQUEOUS ELECTROLYTE SECONDARY BATTERY**

(57) A non-aqueous electrolyte secondary battery (10) comprises a negative electrode (12) that includes: a negative electrode current collector (30); a first negative electrode active material layer (31) provided on the negative electrode current collector (30); and a second negative electrode active material layer (32) provided on the negative electrode current collector (30) with the first negative electrode active material layer (31) interposed therebetween. The ratio (S2/S1) of the interparticle void fractions of the active material layers is 1.1 to 2.0, and the ratio (D2/D1) of the densities of the active material layers is 0.9 to 1.1. The degree of etherification of carboxymethyl cellulose or a salt thereof contained in the active material layers is 0.7 to 1.8.

**Figure 2**

EP 4 723 186 A1

**Description**

TECHNICAL FIELD

The present disclosure relates to a non-aqueous electrolyte secondary battery.

BACKGROUND ART

In recent years, non-aqueous electrolyte secondary batteries such as lithium-ion batteries have been widely used in use requiring a high capacity, such as on-board use and powder storage use. In addition, a non-aqueous electrolyte secondary battery is required to have various performances such as quick-charging performance and good cycle characteristics. Since an electrode, which is a main constituent in the battery, significantly affects these performances, many investigations have been made on the electrode. For example, Patent Literature 1 discloses a negative electrode in which a negative electrode active material layer has a bilayer structure for a purpose of increasing the capacity, and a porosity of a layer of the negative electrode on a surface side is set to be larger than a porosity of a layer on a negative electrode current collector side.

CITATION LIST

PATENT LITERATURE

PATENT LITERATURE 1: Japanese Unexamined Patent Application Publication No. 2003-77463

SUMMARY

As a means for increasing the capacity of the battery, using a silicon-containing material having a high theoretical capacity density for a negative electrode active material, increasing a filling density of the negative electrode active material, and the like, have been proposed conventionally. However, the battery in which these means are applied have a large decrease in capacity in a quick-charging cycle. It is an important challenge to achieve both a high capacity and good quick-charging cycle characteristics. The conventional art including Patent Literature 1 still has large room for improvement in achievement of both the high capacity and the good quick-charging cycle characteristics.

A non-aqueous electrolyte secondary battery according to the present disclosure is a non-aqueous electrolyte secondary battery comprising: an electrode assembly including a positive electrode, a negative electrode, and a separator; and a non-aqueous electrolyte, wherein the negative electrode has: a negative electrode current collector; a first negative electrode active material layer provided on the negative electrode current collector; and a second negative electrode active material layer provided above the negative electrode current collector via the first negative electrode active material layer, the first and second negative electrode active material layers include negative electrode active material particles and carboxymethylcellulose or a salt thereof, a ratio (S2/S1) of an interparticle porosity (S2) of the second negative electrode active material layer to an interparticle porosity (S1) of the first negative electrode active material layer is greater than or equal to 1.1 and less than or equal to 2.0, a ratio (D2/D1) of a density (D2) of the second negative electrode active material layer to a density (D1) of the first negative electrode active material layer is greater than or equal to 0.9 and less than or equal to 1.1, and a degree of etherification of the carboxymethylcellulose or a salt thereof included in the first and second negative electrode active material layers is greater than or equal to 0.7 and less than or equal to 1.8.

The non-aqueous electrolyte secondary battery according to the present disclosure may increase a capacity retention in a quick-charging cycle, and may achieve both the high capacity and the good quick-charging cycle characteristics, for example.

BRIEF DESCRIPTION OF DRAWING

FIG. 1 is a sectional view of a non-aqueous electrolyte secondary battery of an example of an embodiment.
FIG. 2 is a sectional view of a negative electrode of an example of an embodiment.

DESCRIPTION OF EMBODIMENTS

As noted above, it is an important challenge to increase the capacity retention in the quick-charging cycle while increasing the capacity of the battery. In particular, a battery on board is strongly required to have the high capacity and small decrease in the capacity during repetition of quick charge, namely excellent quick-charging cycle characteristics. In the high-capacity batter, however, an electrolyte liquid does not sufficiently permeate in the negative electrode active material layer during quick charge, which tends to deteriorate so-called impregnation. Thus, repetition of the quick charge is considered to advance deterioration of the negative electrode to largely decrease the capacity.

The present inventors have intensively investigated the above problem, and consequently found that excellent quick-charging cycle characteristics can be obtained by setting a negative electrode active material layer to have a multi-layered structure, setting a ratio (S2/S1) of an interparticle porosity (S2) of a second negative electrode active material layer on the negative electrode surface side to an interparticle porosity (S1) of a first negative electrode active material layer on the negative electrode current collector side to be greater than or equal to 1.1 and less than or equal to 2.0, and setting a degree of etherification of carboxymethylcellulose or a salt thereof included in the negative electrode active material layer to be greater than or equal to 0.7 and less than or equal to 1.8. Applying this configuration is considered to effectively improve the impregnation in the negative electrode, and may achieve improvement of quick-charging cycle characteristics significantly exceeding expectations.

Hereinafter, an example of an embodiment of the non-aqueous electrolyte secondary battery according to the present disclosure will be described in detail with reference to the drawings. The scope of the present disclosure includes constitutions composed of selective combinations of constitutional elements of a plurality of embodiments and modified examples described below.

Hereinafter, a cylindrical battery in which a wound electrode assembly 14 is housed in a bottomed cylindrical exterior housing can 16 will be exemplified as a non-aqueous electrolyte secondary battery, but the exterior body of the battery is not limited to the cylindrical exterior housing can. The non-aqueous electrolyte secondary battery according to the present disclosure may be, for example, a rectangular battery comprising a rectangular exterior housing can, a coin battery comprising a coin-shaped exterior housing can, or a laminate battery comprising an exterior body constituted with laminated sheets including a metal layer and a resin layer. The electrode assembly is not limited to a wound electrode assembly, and may be a stacked electrode assembly in which a plurality of positive electrodes and a plurality of negative electrodes are alternately stacked via a separator.

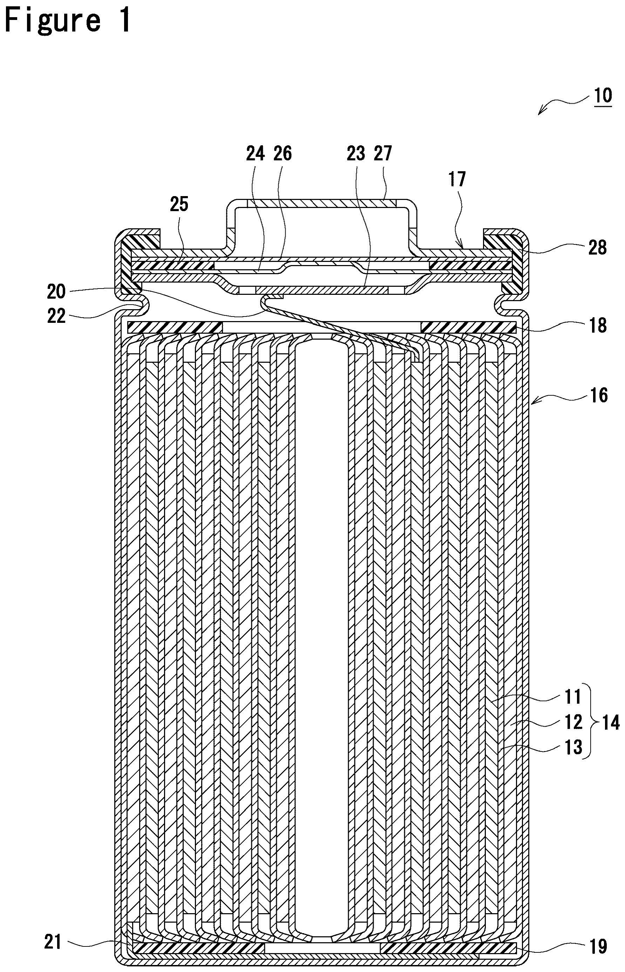

FIG. 1 is a sectional view of a non-aqueous electrolyte secondary battery 10 of an example of an embodiment. As illustrated in FIG. 1, the non-aqueous electrolyte secondary battery 10 is a cylindrical battery comprising the electrode assembly 14, a non-aqueous electrolyte, the bottomed cylindrical exterior housing can 16 housing the electrode assembly 14 and the non-aqueous electrolyte, and a sealing assembly 17 sealing an opening portion of the exterior housing can 16. The electrode assembly 14 includes a positive electrode 11, a negative electrode 12, and a separator 13, and has a wound structure in which the positive electrode 11 and the negative electrode 12 are spirally wound via the separator 13. The exterior housing can 16 has a grooved portion 22 formed on a side wall, and the sealing assembly 17 is supported by the grooved portion 22 to seal the opening portion of the exterior housing can 16. Hereinafter, for convenience of description, the sealing assembly 17 side of the non-aqueous electrolyte secondary battery 10 will be described as the upper side, and the can bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, and a mixed solvent of two or more thereof, and the like are used, for example. An example of the non-aqueous solvent is ethylene carbonate (EC), ethyl methyl carbonate (EMC), dimethyl carbonate (DMC), diethyl carbonate (DEC), a mixed solvent thereof, or the like. The non-aqueous solvent may contain a halogen-substituted product in which hydrogen of these solvents is at least partially replaced with a halogen atom such as fluorine (for example, fluoroethylene carbonate or the like). For the electrolyte salt, a lithium salt such as $LiPF_6$ is used, for example.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction. The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

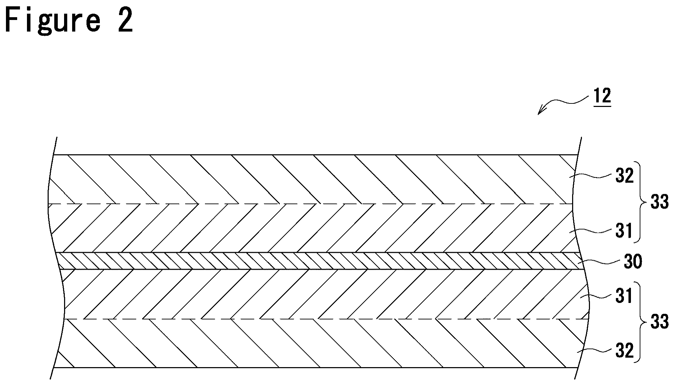

On the outer peripheral surface of the electrode assembly 14, the negative electrode 12 is disposed, and an exposed portion where a surface of a negative electrode current collector 30 constituting the negative electrode 12 (see FIG. 2, described later) is exposed may be provided. In this case, this exposed portion may be contacted with the inner peripheral surface of the exterior housing can 16 to electrically connect the negative electrode 12 and the exterior housing can 16.

A gasket 28 is provided between the exterior housing can 16 and the sealing assembly 17 to achieve sealability inside the battery and to prevent electric contact between the exterior housing can 16 and the sealing assembly 17. On the exterior housing can 16, a grooved portion 22 in which a part of a side surface portion thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 ceimping the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening portion of the cap 27.

Hereinafter, the positive electrode 11, the negative electrode 12, and the separator 13 that constitute the electrode assembly 14, specifically the negative electrode 12, will be described in detail.

[Positive Electrode]

The positive electrode 11 has a positive electrode current collector and a positive electrode active material layer provided on the positive electrode current collector. For the positive electrode current collector, a foil of a metal stable within a potential range of the positive electrode 11, such as aluminum, an aluminum alloy, stainless steel, and titanium, a film in which such a metal is disposed on a surface layer thereof, and the like may be used. The positive electrode active material layer includes a positive electrode active material, a conductive agent, and a binder, and is preferably provided on both surfaces of the positive electrode current collector except for a portion where the positive electrode lead 21 is to be connected. Between the positive electrode current collector and the positive electrode active material layer or on the positive electrode active material layer, a protective layer including inorganic particles and a binder may be provided. The positive electrode 11 may be produced by, for example, applying a positive electrode mixture slurry including the positive electrode active material, the conductive agent, and the binder on the positive electrode current collector, and drying and subsequently compressing the coating film to form the positive electrode active material layer on both the surfaces of the positive electrode current collector.

For the positive electrode active material, a lithium-transition metal composite oxide containing a transition metal element such as Ni, Co, and Mn is used. Examples of the metal element contained in the lithium-transition metal composite oxide include Ni, Co, Mn, Al, Be, B, Na, Mg, Si, K, Ca, Sc, Ti, V, Cr, Fe, Cu, Zn, Ga, Sr, Y, Zr, Nb, Mo, In, Sn, Sb, Ba, Ta, W, Pb, and Bi. Among these, at least one of Ni, Co, and Mn is preferably contained. An example of the preferable composite oxide includes: a lithium-transition metal composite oxide containing Ni, Co, and Mn; and a lithium-transition metal composite oxide containing Ni, Co, and Al. The lithium-transition metal composite oxide may be used singly, or a plurality of types thereof may be used in combination.

The lithium-transition metal composite oxide has, for example, a layered rock-salt structure. Examples of the layered rock-salt structure include a layered rock-salt structure belonging to the space group R-3m and a layered rock-salt structure belonging to the space group C2/m. Among these, the layered rock-salt structure belonging to the space group R-3m is preferable from the viewpoints of increase in the capacity and stability of the crystal structure. A density of the positive electrode active material layer is preferably greater than or equal to 3.3 $g/cm^3$ from the viewpoint of increase in the capacity. An example of an upper limit of the density of the positive electrode active material layer is 3.8 $g/cm^3$.

Examples of the conductive agent included in the positive electrode active material layer may include carbon black such as acetylene black and Ketjenblack, graphite, carbon nanotube (CNT), carbon nanofiber, graphene, metal fiber, metal powder, and conductive whisker. The conductive agent may be used singly, or a plurality of types thereof may be used in combination.

Examples of the binder included in the positive electrode active material layer may include fluorine-containing resins such as polytetrafluoroethylene (PTFE) and polyvinylidene fluoride (PVDF), olefin resins such as polyethylene, polypropylene, ethylene-propylene-isoprene copolymer, and ethylene-propylene-butadiene copolymer, polyacrylonitrile (PAN), a polyimide, a polyamide, and acrylic resins such as ethylene-acrylic acid copolymer. These resins may be used in combination with carboxymethylcellulose (CMC) or a salt thereof, polyethylene oxide (PEO), and the like. The binder may be used singly, or a plurality of types thereof may be used in combination.

[Negative Electrode]

FIG. 2 is a sectional view illustrating the negative electrode 12 cut in the length direction. As illustrated in FIG. 2, the negative electrode 12 has a negative electrode current collector 30 and a negative electrode active material layer 33 provided on the negative electrode current collector 30. The negative electrode active material layer 33 has a multi-layered structure, and includes: a first negative electrode active material layer 31 provided on the negative electrode current collector 30; and a second negative electrode active material layer 32 provided above the negative electrode current collector 30 via the first negative electrode active material layer 31. Although detail will be described later, a ratio (S2/S1) of an interparticle porosity (S2) of the second negative electrode active material layer 32 to an interparticle porosity (S1) of the first negative electrode active material layer 31 is greater than or equal to 1.1 and less than or equal to 2.0, and a ratio (D2/D1) of a density (D2) of the second negative electrode active material layer 32 to a density (D1) of the first negative electrode active material layer 31 is greater than or equal to 0.9 and less than or equal to 1.1.

For the negative electrode current collector 30, a foil of a metal stable within a potential range of the negative electrode 12, such as copper, a copper alloy, stainless steel, nickel, and a nickel alloy, a film in which such a metal is disposed on a surface thereof, and the like may be used. The negative electrode active material layer 33 includes a negative electrode active material and a binder, and is preferably provided on both surfaces of the negative electrode current collector 30 except for a portion where the negative electrode lead 21 is to be connected. Between the negative electrode current collector 30 and the negative electrode active material layer 33 or on the negative electrode active material layer 33, a protective layer including inorganic particles and a binder may be provided. The negative electrode 12 may be produced by, for example, sequentially applying two types of a negative electrode mixture slurry including the negative electrode active material and the binder on the surfaces of the negative electrode current collector 30, and drying and subsequently compressing the coating film to form the negative electrode active material layer 33 including two layers on both the surfaces of the negative electrode current collector 30.

For the negative electrode active material, a carbon material that reversibly occludes and releases lithium ions is typically used. For the negative electrode active material, an element that forms an alloy with Li, such as silicon (Si) and tin (Sn), a material containing such an element, and the like may be used. Among these, a Si-containing material, which contains Si, is preferable. As the negative electrode active material, lithium titanate and the like, which have a higher potential of charge and discharge relative to metal lithium than the carbon material and the like may also be used. The negative electrode active material may be used singly, or a plurality of types thereof may be used in combination. The negative electrode active material layer 33 may include a conductive agent such as CNT. For the conductive agent, the conductive agent same as in the case of the positive electrode **11** may be used.

The carbon material that functions as the negative electrode active material is, for example, at least one selected from the group consisting of natural graphite, artificial graphite, soft carbon, and hard carbon. Among these, graphite is preferably used as the carbon material. The graphite may be artificial graphite such as massive artificial graphite (MAG) and graphitized mesophase-carbon microbead (MCMB), natural graphite such as flake graphite, massive graphite, and amorphous graphite, or a mixture thereof.

A volume-based D50 of the graphite is, for example, greater than or equal to 1 $\mu$m and less than or equal to 30 $\mu$m, and preferably greater than or equal to 5 $\mu$m and less than or equal to 25 $\mu$m. The D50 of the negative electrode active material particles means a particle diameter at which a cumulative frequency is 50% from a smaller particle diameter side in volume-based particle size distribution. The particle size distribution of the lithium-transition metal composite oxide may be measured by using a laser diffraction-type particle size distribution measuring device (for example, MT3000II, manufactured by MicrotracBEL Corp.) with water as a dispersion medium.

The Si-containing material that functions as the negative electrode active material may be any material containing Si, and an example thereof includes a silicon alloy, a silicon compound, and a composite material containing Si. Among these, the composite material **containing** Si is preferable. A D50 of the Si-containing material is typically smaller than the D50 of the graphite. The volume-based D50 of the Si-containing material is, for example, greater than or equal to 1 $\mu$m and less than or equal to 20 $\mu$m, or greater than or equal to 1 $\mu$m and less than or equal to 15 $\mu$m.

The preferable Si-containing material (composite material) is of composite particles including an ion-conductive phase, and Si phases dispersed in the ion-conductive phase. An example of the preferable ion-conductive phase is at least one selected from the group consisting of a silicate phase, a carbon phase, a silicide phase, and a silicon oxide phase. The silicide phase is a phase of a compound composed of Si and an element more electrically positive than Si, and an example thereof includes $NiSi$, $Mg_2Si$, and $TiSi_2$. The Si phase is formed by Si dispersed as fine particles. The ion-conductive phase is a continuous phase constituted by aggregation of particles finer than the Si phase.

The composite material may have a conductive layer covering a surface of the ion-conductive phase. The conductive layer is constituted with a material having higher conductivity than the ion-conductive layer, and forms a good conductive path in the negative electrode active material layer 33. The conductive layer is, for example, a carbon coating constituted with a conductive carbon material. As the conductive carbon material, carbon black such as acetylene black and Ketjenblack, graphite, formless carbon having low crystallinity (amorphous carbon), and the like may be used.

An example of the preferable composite material containing Si is of composite particles that have a sea-island structure in which fine Si is substantially uniformly dispersed in an amorphous silicon oxide phase, and that is represented entirely by the general formula $SiO_x$ ($0 < x \leq 2$). The main component of silicon oxide may be silicon dioxide. The silicon oxide phase may be doped with Li. A content ratio ($x$) of oxygen to Si is, for example, $0.5 \leq x < 2.0$, and preferably $0.8 \leq x \leq 1.5$.

Another example of the preferable composite material containing Si includes composite particles having a sea-island structure in which fine Si is substantially uniformly dispersed in an amorphous silicate phase. A preferable silicate phase is a lithium silicate phase containing Li. The lithium silicate phase is, for example, a phase of a composite oxide represented by the general formula $Li_{2z}SiO_{(2+z)}$ ($0 < z < 2$). The lithium silicate phase preferably does not include $Li_4SiO_4$ ($Z=2$). $Li_4SiO_4$, which is an unstable compound, reacts with water and exhibits alkalinity, and therefore may modify Si, resulting in deterioration of the charge-discharge capacity. The lithium silicate phase preferably contains $Li_2SiO_3$ ($Z=1$) or $Li_2Si_2O_5$ ($Z=1/2$) as a main component from the viewpoints of stability, productivity, Li-ion conductivity, and the like.

Another example of a preferable composite material containing Si is of composite particles having a sea-island structure in which fine Si is substantially uniformly dispersed in a carbon phase. The carbon phase is preferably an amorphous carbon phase. The carbon phase may include a crystalline phase component, but preferably includes more amorphous phase component than the crystalline phase component. The composite material may include particles in which the ion-conductive phase is an amorphous carbon phase. The amorphous carbon phase is constituted with, for example, a carbon material having greater than 0.34 nm of an average spacing of a (002) face measured by X-ray diffraction. The composite material including the carbon phase may have a conductive layer different from the carbon phase, or may not have the conductive layer.

As noted above, the negative electrode active material layer 33 has the first negative electrode active material layer 31 and the second negative electrode active material layer 32 in this order from the negative electrode current collector 30 side. The first negative electrode active material layer 31 and the second negative electrode active material layer 32 are layers having different interparticle porosities, and the interparticle porosity (S2) of the second negative electrode active material layer 32 is larger than the interparticle porosity (S1) of the first negative electrode active material layer 31. The negative electrode active material layer 33 may include a third negative electrode active material layer within a range not impairing the object of the present disclosure, but preferably has the bilayer structure composed of the first negative electrode active material layer 31 and the second negative electrode active material layer 32.

The first negative electrode active material layer 31 and the second negative electrode active material layer 32 include negative electrode active material particles and carboxymethylcellulose (CMC) or a salt thereof. Each of the negative electrode active material layers preferably includes: graphite; and Si or the Si-containing material, as the negative electrode active material particles. Among these, the graphite and the Si-containing material are preferably used in combination. In this case, both the high capacity and the good cycle characteristics are easily achieved. A content of the graphite is, for example, greater than or equal to 80 mass% and less than or equal to 99 mass%, greater than or equal to 85 mass% and less than or equal to 98 mass%, or greater than or equal to 90 mass% and less than or equal to 97 mass% based on the total mass of the negative electrode active material. A content of the Si-containing material is, for example, greater than or equal to 1 mass% and less than or equal to 20 mass%, greater than or equal to 2 mass% and less than or equal to 15 mass%, or greater than or equal to 3 mass% and less than or equal to 10 mass% based on the total mass of the negative electrode active material.

CMC or a salt thereof included in the first negative electrode active material layer 31 and the second negative electrode active material layer 32 functions as the binder and also functions as a thickener to impart appropriate viscosity to the negative electrode mixture slurry. Although detail will be described later, CMC or a salt thereof having a degree of etherification of greater than or equal to 0.7 and less than or equal to 1.8 improves the impregnation in the negative electrode active material layer to contribute to improvement of the quick-charging cycle characteristics. In addition, each of the negative electrode active material layers preferably includes a binder other than CMC or a salt thereof. Each of the negative electrode active material layers may include the same binder as in the case of the positive electrode **11** as the binder, and preferably includes styrene-butadiene rubber (SBR).

A content of the negative electrode active material is, for example, greater than or equal to 90 mass% and less than or equal to 99.5 mass%, or greater than or equal to 95 mass% and less than or equal to 99 mass% relative to the mass of the negative electrode active material layer 33. A content of CMC or a salt thereof is, for example, greater than or equal to 0.1 mass% and less than or equal to 2.5 mass%, or greater than or equal to 0.5 mass% and less than or equal to 1.5 mass% relative to the mass of the negative electrode active material layer 33. In this case, both the high capacity and the good cycle characteristics are easily achieved.

A thickness of the negative electrode active material layer 33 is determined by observation of a cross section of the active material layer using a scanning electron microscope (SEM). Although the thickness of the negative electrode active material layer 33 is substantially constant, the thickness means an average value of the thickness unless otherwise mentioned herein. The thicknesses of the first negative electrode active material layer 31 and the second negative electrode active material layer 32 may be different from each other, but are preferably approximately the same from the viewpoint of achievement of both the high capacity and the good cycle characteristics. When the negative electrode active material layer 33 has the bilayer structure, a thickness of the first negative electrode active material layer 31 is preferably greater than or equal to 30% and less than or equal to 70%, and more preferably greater than or equal to 40% and less than or equal to 60% of the total thickness of the negative electrode active material layer 33.

The densities (D1, D2) of the first negative electrode active material layer 31 and the second negative electrode active material layer 32 are preferably greater than or equal to 1.3 g/cm$^3$, and more preferably greater than or equal to 1.4 g/cm$^3$ from the viewpoint of increasing the capacity. Upper limits of the densities (D1, D2) are, for example, 2.0 g/cm$^3$. From the viewpoint of achievement of both the high capacity and the good cycle characteristics, an example of a preferable range of the densities (D1, D2) is greater than or equal to 1.3 g/cm$^3$ and less than or equal to 2.0 g/cm$^3$.

The ratio (D2/D1) of the density (D2) of the second negative electrode active material layer 32 to the density (D1) of the first negative electrode active material layer 31 is greater than or equal to 0.9 and less than or equal to 1.1. The densities (D1, D2) may be different from each other, but the difference between the densities (D1, D2) is preferably small from the viewpoint of increasing the capacity, and the densities (D1, D2) are regulated so that the ratio (D2/D1) satisfies the requirement of greater than or equal to 0.9 and less than or equal to 1.1. For example, largely reducing the density (D2) of the second negative electrode active material layer 32 improves the impregnation, but the capacity considerably decreases in this case. According to the negative electrode 12, the impregnation can be improved without largely reducing the density (D2), and the excellent quick-charging cycle characteristics can be achieved.

[Method for Calculating Density of Negative Electrode Active Material Layer]

From the sectional SEM image of the negative electrode active material layer 33 (which is the same as the image used in determining the interparticle porosity), the thickness of each of the first negative electrode active material layer 31 and the second negative electrode active material layer 32 is measured. A mass of the negative electrode active material layer per unit area is determined to calculate the density (mass of the negative electrode active material layer per unit area $\times$ 100 / (unit area + thickness of the negative electrode active material layer)).

The interparticle porosity (S2) of the second negative electrode active material layer 32 is higher than the interparticle porosity (S1) of the first negative electrode active material layer 31. The interparticle porosity of the active material layer means a proportion of an area of interparticle pores in the negative electrode active material relative to a sectional area of the active material layer, and pores in the active material particles are not counted as the interparticle porosity. Setting the interparticle porosity (S2) of the second negative electrode active material layer 32 to be high improves permeability of the electrolyte liquid in the entirety of the negative electrode active material layer 33.

The ratio (S2/S1) of the interparticle porosity (S2) of the second negative electrode active material layer 32 to the interparticle porosity (S1) of the first negative electrode active material layer 31 is set to be greater than or equal to 1.1 and less than or equal to 2.0, as noted above. The ratio (S2/S1) is more preferably greater than or equal to 1.1 and less than or equal to 1.7, and particularly preferably greater than or equal to 1.2 and less than or equal to 1.5. In this case, both the high capacity and the good cycle characteristics are easily achieved. The negative electrode 12 is designed so that the interparticle porosity (S2) becomes high while inhibiting decrease in the density (D2) of the second negative electrode active material layer 32.

Specific examples of a method for forming the first negative electrode active material layer 31 and the second negative electrode active material layer 32 include using particles A having many internal pores for graphite particles constituting the first negative electrode active material layer 31 and using particles B having a few internal pores for graphite particles constituting the second negative electrode active material layer 32. Regulating the internal pores of the particles A and B as above may control the interparticle porosities (S1, S2) within the target ranges. In addition, the interparticle porosities (S1, S2) may be controlled also by changing particle size distribution of the negative electrode active material in each of the active material layers.

Artificial graphite may be synthesized by, for example, crushing a coke to a particle diameter of greater than or equal to 12 $\mu$m and less than or equal to 20 $\mu$m, then adding pitch that functions as a binder to aggregate the crushed particles, and calcining the mixture at a high temperature of greater than or equal to 2500°C. In this time, the amount of the pores inside the particles may be controlled by a degree of crushing of the coke, an amount of the pitch added, presence or absence of molding of the aggregate, and the like. In typical, increasing the particle diameter of the crushed coke makes the internal pores small, and increasing the amount of the pitch added makes the internal pores large.

The interparticle porosity (S1) of the first negative electrode active material 31 is preferably greater than or equal to 2.5% and less than or equal to 25%. The interparticle porosity (S2) of the second negative electrode mixture layer 32 is preferably greater than or equal to 3% and less than or equal to 50%. The ratio (S2/S1) is controlled to be greater than or equal to 1.1 and less than or equal to 2.0.

[Method for Measuring Interparticle Porosity of Negative Electrode Active Material Layer]

The interparticle porosity (S2/S1) of each of the negative electrode active material layers is determined by the following method.

(1) A cross section of the negative electrode active material layer 33 is exposed with an ion-milling apparatus (IM4000PLUS, manufactured by Hitachi High-Tech Corporation), and a backscattered electron image of the exposed cross section of the negative electrode active material layer 33 is photographed with a SEM with the magnification of 800.
(2) The obtained sectional image is imported into a computer, and portions of the first negative electrode active material layer 31 and the second negative electrode active material layer 32 are extracted.
(3) The extracted sectional image is subjected to binarization processing by using an image analysis software to obtain a binarization-processed image in which a particle cross section of the negative electrode active material in the sectional image is converted in white and the interparticle pores are converted in black. For the image analysis software, ImageJ, available from National Institutes of Health, is used. The binarization processing is performed so that pores inside the particles become white.
(4) From the proportion of the white and black areas, the interparticle porosity (the black area of the interparticle pores $\times$ 100 / (the black area of the interparticle pores + the white area of the negative electrode active material particles)) is calculated. For calculating the interparticle porosity, an electrode plate of a battery subjected to an initial low-rate cycle measurement (see Examples described later) is used.

As noted above, CMC or a salt thereof included in the first negative electrode active material layer 31 and the second negative electrode active material layer 32 has a degree of etherification of greater than or equal to 0.7 and less than or equal to 1.8. In this case, the permeability of the electrolyte liquid in the negative electrode active material layer is improved to improve the quick-charging cycle characteristics. CMC is a water-soluble polymer in which hydroxyl groups in a cellulose skeleton are partially replaced by a carboxymethyl group. A degree of substitution with the carboxymethyl group is represented by the degree of etherification.

The first negative electrode active material layer 31 and the second negative electrode active material layer 32 preferably include a salt in which the carboxyl groups in CMC are neutralized. Examples of the salt of CMC include a sodium salt, an ammonium salt, a lithium salt, a potassium salt, a rubidium salt, and a cesium salt, and the salt is preferably a sodium salt (CMC-Na). CMC-Na is typically a partially neutralized salt in which the carboxyl groups are partially neutralized. A weight-average molecular weight of CMC-Na is, for example, greater than or equal to 200 thousands and less than or equal to 1 million, and preferably greater than or equal to 200 thousands and less than or equal to 500 thousands.

The degree of etherification of CMC-Na is more preferably greater than or equal to 0.8 and less than or equal to 1.4, and particularly preferably greater than or equal to 0.9 and less than or equal to 1.2. An excessively high degree of etherification of CMC-Na is considered to decrease an adhesive force of the negative electrode active material layer 33 to the negative electrode current collector 30, which may improve the permeability of the electrolyte liquid but fail to yield the effect of improving the cycle characteristics. The degree of etherification within the above range may remarkably improve the quick-charging cycle characteristics.

The degree of etherification of CMC or a salt thereof included in the second negative electrode active material layer 32 is preferably higher than the degree of etherification of CMC or a salt thereof included in the first negative electrode active material layer 31. In this case, the effect of improving the quick-charging cycle characteristics becomes more remarkable. A ratio (DS2/DS1) of the degree of etherification (DS2) of CMC or a salt thereof included in the second negative electrode active material layer 32 to the degree of etherification (DS1) of CMC or a salt thereof included in the first negative electrode active material layer 31 is, for example, greater than or equal to 1.5 and less than or equal to 2.3.

[Method for Measuring Degree of Etherification of Carboxymethylcellulose]

About 1 g of a sample is weighed in a flask, and an appropriate amount of pure water is added to dissolve the sample. Into this, about 5 mL of a 0.05 M (N/10) sulfuric acid aqueous solution is added with a pipette, the mixture is boiled for several minutes and cooled, and then a phenolphthalein indicator is added to titrate the sample with a 0.1 M (N/10) sodium hydroxide aqueous solution. An alkalinity is calculated by the following formula.

Alkalinity = 5×F' - 0.1 M (N/10) Sodium hydroxide aqueous solution, mL × F / Sample (in terms of anhydride, g)

F: Factor of the 0.1 M (N/10) sodium hydroxide aqueous solution
F': Factor of the 0.05 M (N/10) sulfuric acid aqueous solution

About 1 g of the sample is weighed, put in a crucible, and calcined at greater than or equal to 500°C. After cooling, the sample together with the crucible is transferred to a beaker, an appropriate amount of pure water is added, then 50 mL of a 0.05 M (N/10) sulfuric acid aqueous solution is exactly added, and the mixture is boiled for several tens of minutes. After cooling, a phenolphthalein indicator is added to titrate the sample with a 0.1 M (N/10) sodium hydroxide aqueous solution.
By this method, a blank test titration is similarly performed. The degree of etherification is calculated by the following formula.

A = (Blank test titration, mL - Sample titration, mL) × F / Sample (in terms of anhydride, g) - Alkalinity F: Factor of the 0.1 M (N/10) sodium hydroxide aqueous solution
The above A means a number of mL of the 0.05 M (N/10) sulfuric acid aqueous solution consumed to neutralize bonding sodium in 1 g of the sample. The following degree of etherification is calculated by using the above A.

$$\text{Degree of etherification (DS)} = 162A / (10000 - 80A)$$

[Separator]

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. The separator 13 may have, for example: a multi-layered structure including a thermoplastic resin layer such as a polyolefin and a cellulose fiber layer; a bilayer structure of polyethylene (PE) / polypropylene (PP); or a three-layer structure of PE/PP/PE. On a surface of the separator 13, a filler layer including an inorganic filler or a highly heat-resistant resin layer such as an aramid resin may be provided.

EXAMPLES

Hereinafter, the present disclosure will be further described with Examples, but the present disclosure is not limited to these Examples.

<Example 1>

[Production of Positive Electrode]

As a positive electrode active material, aluminum-containing lithium nickel cobaltate ($LiNi_{0.88}Co_{0.09}Al_{0.03}O_2$) was used. The positive electrode active material, graphite, and polyvinylidene fluoride were mixed at a solid-content mass ratio of 100:1:0.9, and N-methyl-2-pyrrolidone (NMP) was used as a dispersion medium to prepare a positive electrode mixture slurry. Then, the positive electrode mixture slurry was applied on both surfaces of a positive electrode current collector composed of aluminum foil (thickness: 15 $\mu$m) by a doctor blade method, and the coating film was dried and compressed by using a roller. Thereafter, the positive electrode current collector was cut to a predetermined electrode size to obtain a positive electrode in which a positive electrode active material layer was formed on both the surfaces of the positive electrode current collector.

[Synthesis of Graphite Particles B]

A coke (a precursor) was crushed until the D50 reached 13 $\mu$m, and pitch (a binder) was added to aggregate the crushed coke until the D50 reached 18 $\mu$m. This aggregate was calcined at a temperature of 2800°C for graphitization, and then sieved to obtain graphite particles B having a D50 of 23 $\mu$m.

[Synthesis of Graphite Particles A]

A coke was crushed until the D50 reached 17 μm, pitch was added to aggregate the crushed coke, and then this aggregate was isotropically compressed and molded into a block shape having a density of greater than or equal to 1.6 g/cm$^3$ and less than or equal to 1.9 g/cm$^3$. This block-shaped molded product was calcined at a temperature of 2800°C for graphitization, and then the molded product was crushed and sieved to obtain graphite particles A having a D50 of 23 μm. Note that the graphite particles A having a higher porosity than the graphite particles B were obtained by setting the amount of the pitch used in the synthesis of the graphite particles A to be larger than the amount of the pitch used in the synthesis of the graphite particles B.

[Production of Negative Electrode]

As a negative electrode active material, a mixture in which graphite particles A and a Si-containing material represented by SiO$_X$ (X = 1) were mixed at a mass ratio of 95:5 was used. The negative electrode active material, a dispersion of styrene-butadiene rubber (SBR), and a sodium salt of carboxymethylcellulose (CMC-Na) having a degree of etherification (DS) of 1.0 were mixed at a solid-content mass ratio of 100:1:1, and water was used as a dispersion medium to prepare a negative electrode mixture slurry A. Similarly, a negative electrode mixture slurry B using the graphite particles B instead of the graphite particles A was prepared.

Then, the negative electrode mixture slurry A was applied on both surfaces of a negative electrode current collector composed of copper foil by a doctor blade method to form a first coating film, the first coating film was dried, then the negative electrode mixture slurry B was applied on the first coating film to form a second coating film, and the second coating film was dried. In this time, the amounts of the negative electrode mixture slurries applied per unit area were set to be equal. Thereafter, the coating films were compressed by using a roller, and the negative electrode current collector was cut to a predetermined electrode size to obtain a negative electrode in which a negative electrode active material layer having a bilayer structure including first and second layers was formed on both the surfaces of the negative electrode current collector.

The density (D1) of the first negative electrode active material layer measured by the above method was 1.59 g/cm$^3$, the density (D2) of the second negative electrode active material layer was 1.49 g/cm$^3$, and D2/D1 was 0.94. S2/S1 measured by the above method was 1.39.

[Preparation of Non-Aqueous Electrolyte Liquid]

Ethylene carbonate and dimethylcarbonate were mixed at a volume ratio (25°C) of 1:3, and then vinylene carbonate and LiPF$_6$ were added into this mixed solvent so that the concentrations were respectively 5 mass% and 1 mol/L to obtain a non-aqueous electrolyte liquid.

[Production of Test Cell (Non-Aqueous Electrolyte Secondary Battery)]

The above positive electrode in which a positive electrode lead was welded to the positive electrode current collector and the above negative electrode in which a negative electrode lead was welded to the negative electrode current collector were spirally wound via a separator to produce a wound electrode assembly. Insulating plates were respectively disposed on the upper and lower sides of the electrode assembly, the negative electrode lead was welded to an inner surface of a can bottom of a bottomed cylindrical exterior housing can, the positive electrode lead was welded to a sealing assembly, and the electrode assembly was housed in the exterior housing can. The above non-aqueous electrolyte liquid was injected into the exterior housing can by a pressure-reducing method, and then an opening portion of the exterior housing can was sealed with the sealing assembly via a gasket to obtain a test cell.

<Example 2>

A negative electrode and a test cell were produced in the same manner as in Example 1 except that, in the preparation of the negative electrode mixture slurries A and B, CMC-Na having a DS of 1.4 was used.

<Example 3>

A negative electrode and a test cell were produced in the same manner as in Example 1 except that, in the preparation of the negative electrode mixture slurries A and B, CMC-Na having a DS of 1.6 was used.

<Example 4>

A negative electrode and a test cell were produced in the same manner as in Example 1 except that, in the preparation of the negative electrode mixture slurries A and B, CMC-Na having a DS of 0.9 was used.

<Comparative Example 1>

A negative electrode and a test cell were produced in the same manner as in Example 1 except that, in the preparation of the negative electrode mixture slurries A and B, CMC-Na having a DS of 0.6 was used.

<Comparative Example 2>

A negative electrode and a test cell were produced in the same manner as in Example 1 except that, in the preparation of the negative electrode mixture slurries A and B, CMC-Na having a DS of 2.0 was used.

<Comparative Example 3>

A negative electrode and a test cell were produced in the same manner as in Example 1 except that, in the production of the negative electrode, the order of applying the negative electrode mixture slurries A and B was changed so that the negative electrode mixture slurry B was applied first. **In** this case, D2/D1 was 1.02, and S2/S1 was 0.70.

<Comparative Example 4>

A negative electrode and a test cell were produced in the same manner as in Example 1 except that, in the production of the negative electrode, a negative electrode active material layer having a single-layered structure was formed by using a slurry in which the same amounts of the negative electrode mixture slurries A and B were mixed. In this case, the density of the negative electrode active material layer was 1.51 $g/cm^3$.

Each of the test cells of Examples and Comparative Examples was subjected to performance evaluation by the following method. Table 1 shows the evaluation results together with the physical properties of the negative electrode. The capacity retentions shown in Table 1 are values relative to the capacity retention of Example 1 being 100, and a higher value thereof means more excellent quick-charging cycle characteristics.

[Condition of Initial Low-Rate Cycle]

Under a temperature environment at 25°C, each of the test cells of Examples and Comparative Examples was charged at a constant current of 0.2 C (920 mA) until a cell voltage reached 4.2 V, and then charged at a constant voltage of 4.2 V until C/50. Thereafter, the test cell was discharged at a constant current of 0.2 C until the cell voltage reached 2.5 V. This charge and discharge was repeated with five cycles, then the cell was unpacked and the negative electrode was taken out, and the interparticle porosity was determined by the above method.

[Evaluation of Quick-Charging Cycle Characteristics (Capacity Retention)]

Under a temperature environment at 25°C, each of the test cells of Examples and Comparative Examples was charged at a constant current of 1 C (4600 mA) until a cell voltage reached 4.2 V, and then charged at a constant voltage of 4.2 V until C/50. Thereafter, the test cell was discharged at a constant current of 0.5 C until the cell voltage reached 2.5 V. This charge and discharge was repeated with 100 cycles, and the capacity retention was determined by the following formula.

Capacity retention = (Discharge capacity at 100th cycle / Discharge capacity at 1st cycle) $\times$ 100

[Table 1]

| | Graphite | | Density (g/cm³) | | D2/D1 | S2/S1 | CMC-DS | Capacity (mAh) | Capacity retention (%) |
|---|---|---|---|---|---|---|---|---|---|
| | First layer | Second layer | First layer D1 | Second layer D2 | | | | | |
| Example 1 | A | B | 1.59 | 1.49 | 0.94 | 1.39 | 1.0 | 4572 | 100 |
| Example 2 | A | B | 1.59 | 1.49 | 0.94 | 1.39 | 1.4 | 4572 | 98 |
| Example 3 | A | B | 1.59 | 1.49 | 0.94 | 1.39 | 1.6 | 4572 | 96 |
| Example 4 | A | B | 1.59 | 1.49 | 0.94 | 1.39 | 0.9 | 4572 | 98 |
| Comparative Example 1 | A | B | 1.59 | 1.49 | 0.94 | 1.39 | 0.6 | 4572 | 94 |
| Comparative Example 2 | A | B | 1.59 | 1.49 | 0.94 | 1.39 | 2.0 | 4570 | 77 |
| Comparative Example 3 | B | A | 1.42 | 1.45 | 1.02 | 0.70 | 0.6 | 4590 | 61 |
| Comparative Example 4 | A+B | | 1.51 | | 1.00 | 0.99 | 0.6 | 4574 | 72 |

As shown in table 1, the test cells of Examples exhibited the high capacity retention in the quick-charging cycle compared with the test cells of Comparative Examples while keeping the capacity equivalent to that of the test cells of Comparative Examples. When the negative electrode having the negative electrode active material layer with the single-layer structure was used and when the negative electrode in which the ratio (S2/S1) between the interparticle porosities of the negative electrode active material layers was less than 1.1 was used, the capacity retention was considerably deteriorated compared with the test cells of Examples (see Comparative Examples 3 and 4). In addition, the test cells of Comparative Examples 1 and 2 in which only the degree of etherification (DS) of CMC-Na included in the negative electrode active material layer was different from that in the test cells of Examples failed to obtain the excellent quick-charging cycle characteristics as of the test cells of Examples.

The present disclosure will be further described with the following embodiments.

Constitution 1: A non-aqueous electrolyte secondary battery, comprising: an electrode assembly including a positive electrode, a negative electrode, and a separator; and a non-aqueous electrolyte, wherein the negative electrode has: a negative electrode current collector; a first negative electrode active material layer provided on the negative electrode current collector; and a second negative electrode active material layer provided above the negative electrode current collector via the first negative electrode active material layer, the first and second negative electrode active material layers include negative electrode active material particles and carboxymethylcellulose or a salt thereof, a ratio (S2/S1) of an interparticle porosity (S2) of the second negative electrode active material layer to an interparticle porosity (S1) of the first negative electrode active material layer is greater than or equal to 1.1 and less than or equal to 2.0, a ratio (D2/D1) of a density (D2) of the second negative electrode active material layer to a density (D1) of the first negative electrode active material layer is greater than or equal to 0.9 and less than or equal to 1.1, and a degree of etherification of the carboxymethylcellulose or a salt thereof included in the first and second negative electrode active material layers is greater than or equal to 0.7 and less than or equal to 1.8.

Constitution 2: The non-aqueous electrolyte secondary battery according to Constitution 1, wherein the ratio (S2/S1) is greater than or equal to 1.1 and less than or equal to 1.7.

Constitution 3: The non-aqueous electrolyte secondary battery according to Constitution 1 or 2, wherein densities (D1, D2) of the first and second negative electrode active material layers are greater than or equal to 1.3 g/cm³ and less than or equal to 2.0 g/cm³.

Constitution 4: The non-aqueous electrolyte secondary battery according to any one of Constitutions 1 to 3, wherein the first and second negative electrode active material layers include graphite and silicon or a silicon-containing material as the negative electrode active material particles.

Constitution 5: The non-aqueous electrolyte secondary battery according to any one of Constitutions 1 to 4, wherein a weight-average molecular weight of the carboxymethylcellulose or a salt thereof included in the first and second negative electrode active material layers is greater than or equal to 200 thousands and less than or equal to 500 thousands.

Constitution 6: The non-aqueous electrolyte secondary battery according to any one of Constitutions 1 to 5, wherein the carboxymethylcellulose salt included in the first and second negative electrode active material layers includes, as the salt, at least one of the group consisting of a sodium salt, an ammonium salt, a lithium salt, a potassium salt, a rubidium salt, and a cesium salt.

REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Negative electrode current collector, 31 First negative electrode active material layer, 32 Second negative electrode active material layer, 33 Negative electrode active material layer

**Claims**

1.  A non-aqueous electrolyte secondary battery, comprising:

    an electrode assembly including a positive electrode, a negative electrode, and a separator; and
    a non-aqueous electrolyte, wherein
    the negative electrode has: a negative electrode current collector; a first negative electrode active material layer provided on the negative electrode current collector; and a second negative electrode active material layer provided above the negative electrode current collector via the first negative electrode active material layer,
    the first and second negative electrode active material layers include negative electrode active material particles and carboxymethylcellulose or a salt thereof,
    a ratio (S2/S1) of an interparticle porosity (S2) of the second negative electrode active material layer to an interparticle porosity (S1) of the first negative electrode active material layer is greater than or equal to 1.1 and less than or equal to 2.0,
    a ratio (D2/D1) of a density (D2) of the second negative electrode active material layer to a density (D1) of the first negative electrode active material layer is greater than or equal to 0.9 and less than or equal to 1.1, and
    a degree of etherification of the carboxymethylcellulose or a salt thereof included in the first and second negative electrode active material layers is greater than or equal to 0.7 and less than or equal to 1.8.

2.  The non-aqueous electrolyte secondary battery according to claim 1, wherein the ratio (S2/S1) is greater than or equal to 1.1 and less than or equal to 1.7.

3.  The non-aqueous electrolyte secondary battery according to claim 1, wherein the densities (D1, D2) of the first and second negative electrode active material layers are greater than or equal to 1.3 g/cm$^3$ and less than or equal to 2.0 g/cm$^3$.

4.  The non-aqueous electrolyte secondary battery according to claim 1, wherein the first and second negative electrode active material layers include graphite and silicon or a silicon-containing material as the negative electrode active material particles.

5.  The non-aqueous electrolyte secondary battery according to claim 1, wherein a weight-average molecular weight of the carboxymethylcellulose or a salt thereof included in the first and second negative electrode active material layers is greater than or equal to 200 thousands and less than or equal to 500 thousands.

6.  The non-aqueous electrolyte secondary battery according to claim 1, wherein the carboxymethylcellulose salt included in the first and second negative electrode active material layers includes, as the salt, at least one of the group consisting of a sodium salt, an ammonium salt, a lithium salt, a potassium salt, a rubidium salt, and a cesium salt.

# Figure 1

# Figure 2

## INTERNATIONAL SEARCH REPORT

| International application No. |
|---|
| **PCT/JP2024/019401** |

**A.    CLASSIFICATION OF SUBJECT MATTER**

*H01M 4/13*(2010.01)i; *H01M 4/133*(2010.01)i; *H01M 4/134*(2010.01)i; *H01M 4/36*(2006.01)i; *H01M 4/38*(2006.01)i; *H01M 4/48*(2010.01)i; *H01M 4/587*(2010.01)i; *H01M 4/62*(2006.01)i
FI:    H01M4/13; H01M4/133; H01M4/134; H01M4/36 E; H01M4/38 Z; H01M4/48; H01M4/587; H01M4/62 Z

According to International Patent Classification (IPC) or to both national classification and IPC

**B.    FIELDS SEARCHED**

Minimum documentation searched (classification system followed by classification symbols)

H01M4/13; H01M4/133; H01M4/134; H01M4/36; H01M4/38; H01M4/48; H01M4/587; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | WO 2021/059706 A1 (PANASONIC INTELLECTUAL PROPERTY MANAGEMENT CO., LTD.) 01 April 2021 (2021-04-01) claims 1, 6, paragraphs [0026]-[0031], [0046], examples | 1-6 |
| Y | WO 2022/070895 A1 (PANASONIC INTELLECTUAL PROPERTY MANAGEMENT CO., LTD.) 07 April 2022 (2022-04-07) claims 6, 8, examples | 1-6 |
| Y | JP 2013-73718 A (SANYO ELECTRIC CO., LTD.) 22 April 2013 (2013-04-22) claim 1 | 1-6 |
| Y | JP 2010-238365 A (HITACHI VEHICLE ENERGY LTD.) 21 October 2010 (2010-10-21) claim 3 | 1-6 |
| A | WO 2014/141403 A1 (HITACHI, LTD.) 18 September 2014 (2014-09-18) entire text | 1-6 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 August 2024** | **20 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/019401**

| Patent document cited in search report | | | Publication date (day/month/year) | Patent family member(s) | | | Publication date (day/month/year) |
|---|---|---|---|---|---|---|---|
| WO | 2021/059706 | A1 | 01 April 2021 | US | 2022/0376227 | A1 | |
| | | | | claims 1, 6, paragraphs [0032]-[0036], [0054], examples | | | |
| | | | | EP | 4037014 | A1 | |
| | | | | CN | 114430864 | A | |
| WO | 2022/070895 | A1 | 07 April 2022 | US | 2023/0343942 | A1 | |
| | | | | claims 6, 8, examples | | | |
| | | | | EP | 4224565 | A1 | |
| | | | | CN | 116195089 | A | |
| JP | 2013-73718 | A | 22 April 2013 | US | 2013/0078497 | A1 | |
| | | | | claim 1 | | | |
| | | | | CN | 103022551 | A | |
| JP | 2010-238365 | A | 21 October 2010 | (Family: none) | | | |
| WO | 2014/141403 | A1 | 18 September 2014 | (Family: none) | | | |

Form PCT/ISA/210 (patent family annex) (July 2022)

**EP 4 723 186 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003077463 A